(19) **Europäisches Patentamt**
**European Patent Office**
**Office européen des brevets**

(11) **EP 0 745 310 B1**

(12) **EUROPÄISCHE PATENTSCHRIFT**

(45) Veröffentlichungstag und Bekanntmachung des Hinweises auf die Patenterteilung:
**30.07.1997 Patentblatt 1997/31**

(21) Anmeldenummer: **95909738.7**

(22) Anmeldetag: **17.02.1995**

(51) Int Cl.[6]: **H04N 11/04**

(86) Internationale Anmeldenummer:
**PCT/EP95/00590**

(87) Internationale Veröffentlichungsnummer:
**WO 95/22869 (24.08.1995 Gazette 1995/36)**

(54) **VERFAHREN UND VORRICHTUNG ZUM ERZEUGEN UND WIEDERGEBEN VON KOMPRIMIERTEN FARBIGEN VIDEOSZENEN**

METHOD AND DEVICE FOR GENERATING AND PLAYING BACK COMPRESSED COLOUR VIDEO SCENES

PROCEDE ET DISPOSITIF DE PRODUCTION ET DE REPRODUCTION DE SCENES VIDEO COULEUR COMPRIMEES

(84) Benannte Vertragsstaaten:
**DE FR GB IT NL**

(30) Priorität: **18.02.1994 DE 4405217**
**21.06.1994 DE 4421657**

(43) Veröffentlichungstag der Anmeldung:
**04.12.1996 Patentblatt 1996/49**

(73) Patentinhaber: **Q-TEAM DR. KNABE GESELLSCHAFT FÜR INFORMATIONS -UND QUALIFIKATIONSSYSTEME MBH**
**41352 Korschenbroich (DE)**

(72) Erfinder:
• **HOFFMANN, Peter**
**D-01099 Dresden (DE)**
• **KNABE, Gerald**
**D-41352 Korschenbroich (DE)**

(74) Vertreter: **Prüfer, Lutz H., Dipl.-Phys. et al**
**Harthauser Strasse 25d**
**81545 München (DE)**

(56) Entgegenhaltungen:
**EP-A- 0 107 072           US-A- 4 849 807**

• **PATENT ABSTRACTS OF JAPAN vol. 16 no. 439 (P-1420) ,14.September 1992 & JP,A,04 152386 (TOKYO ELECTRIC CO LTD) 26.Mai 1992,**
• **PATENT ABSTRACTS OF JAPAN vol. 17 no. 711 (P-1668) ,24.Dezember 1993 & JP,A,05 242232 (HITACHI LTD) 21.September 1993,**
• **PATENT ABSTRACTS OF JAPAN vol. 16 no. 439 (P-1420) ,14.September 1992 & JP,A,04 152386**
• **PATENT ABSTRACTS OF JAPAN vol. 17 no. 711 (P-1668) ,24.Dezember 1993 & JP,A,05 242232**

**Beschreibung**

Die vorliegende Erfindung bezieht sich auf ein Verfahren zum Erzeugen einer komprimierten farbigen Videoszene aus einer farbigen Ausgangsszene, ein Verfahren zum Wiedergeben einer komprimierten farbigen Videoszene und auf eine Vorrichtung zum Erzeugen einer komprimierten farbigen Videoszene aus einer farbigen Ausgangsszene und zum Wiedergeben der komprimierten farbigen Videoszene.

Herkömmlicherweise werden Videoszenen auf Videobändern aufgezeichnet und mit speziellen Videorekordern auf dem Bildschirm eines Fernsehgerätes oder ähnlichem wiedergegeben. Es besteht jedoch der Wunsch, auch den Bildschirm eines Personalcomputers (PC) zum Wiedergeben von Videoszenen benutzen zu können und die Videoszenen dazu digital in einem PC zu speichern.

Dabei treten jedoch folgende Probleme auf, wenn eine Farbdarstellung gewählt werden soll. Herkömmlicherweise wird in einem True-Colour-Verfahren ein Byte für jede von den Farben verwendet, so daß $2^{24}$, d.h. ca. 16 Millionen verschiedene Farben vorkommen. Diese große Zahl von Farben muß reduziert werden, damit der PC sie handhaben kann. Das geschieht herkömmlicherweise durch Vorgabe einer sogenannten Standardfarbpalette, die eine gewisse Anzahl von Farbwerten enthält und an die die einzelnen Pixel eines jeden Einzelbildes, auch Frame genannt, angeglichen werden. Nach einer anderen Ausführungsform wird ein sogenannter Median-Cut-Algorithmus verwendet, der häufig benutzte Farben gut angleicht, aber keine Rücksicht auf Details nimmt.

Des weiteren kann ein Einzelbild ohne weiteres aus 576 Zeilen und 720 Spalten bestehen, wodurch jedes Einzelbild eine sehr große Zahl von Pixeln aufweist. Daher können die Einzelbilder nicht mehr pixelweise gespeichert werden, sondern sie müssen komprimiert werden. Das geschieht herkömmlicherweise dadurch, daß geeignete Transformationen mit Pixelgruppen durchgeführt werden. Eine übliche Transformation ist die sogenannten DCT (Dicrete Cosine Transform), bei der Pixelgruppen von z.B. 8x8=64 Pixel durch Cosinus-Grundfrequenzen beschrieben werden. Dabei werden gleichzeitig eine Quantifizierung, die bestimmte Werte ignoriert und eine sogenannte Huffman-Codierung, die nach statistischen Gesichtspunkten komprimiert, vorgenommen. Nach einer anderen Ausführungsform wird eine Differenzbildrechnung vorgenommen, bei der die Abweichung zwischen 2 Bildern nach einem Laufzeit-Längen-Kompressionsverfahren gespeichert werden. Im ersten Verfahren muß zusätzliche Hardware zum Beschleunigen des Verfahrens eingesetzt werden, im zweiten Fall sind sehr große Datenspeicher nötig.

Weiterhin können bei dem Übergang von einer Einstellung zu einer nächsten Einstellung (für Einstellung wird im folgenden auch Szene gesagt) große Abweichungen in der Farbpalette auftreten, so daß die Farbwerte bei einem Szenenwechsel unangepaßt sind.

Schließlich stellen PC-Betriebssysteme typischerweise einen Takt von minimal 1/18,2 sec zur Verfügung. Daher verzichten Software-Video-Player im allgemeinen ganz auf eine Taktgebung und geben die Einzelbilder so schnell wie möglich aus. Eine Angleichung auf getrennt vorliegende Audiodaten ist sehr kompliziert. Daher stimmt häufig die Lippenbewegung von Schauspielern nicht mit der wiedergegebenen Sprache überein. Das Anpassen der Laufbilder an den Ton geschieht ruckend.

In der EP-A-0 107 072 ist ein Verfahren zum Erzeugen von farbigen Videoszenen beschrieben, bei dem eine nicht-lineare Transformation der RGB-Darstellung für jeden abgetasteten Bildpunkt durchgeführt wird. Mit Hilfe einer Bewertungstabelle wird die Aufteilung des RGB-Farbraumes je Bild vorgenommen. Aus den drei danach entstandenen Codewörtern wird ein gemeinsames Codeword berechnet.

Aus der JP-4 152 386 A ist zu entnehmen, daß mit einem Unterteilungsmittel der gesamte Farbraum in eine begrenzte Zahl von Gebieten unterteilt wird. Dabei werden die Farben des Farbraumes, in denen die Farbverteilung eng liegt, fein unterteilt, und die Teile des Farbraumes, in denen die Farbverteilung grob ist, wird grob unterteilt. Ein Mittel wird für jedes Gebiet berechnet.

Es ist daher Aufgabe der Erfindung, ein Verfahren und eine Vorrichtung zum Erzeugen und Wiedergeben von komprimierten farbigen Videoszenen zur Verfügung zu stellen, die eine schnelle farbreine Speicherung und eine schnelle, farbreine und ruckfreie Wiedergabe ermöglichen.

Diese Aufgabe wird gelöst durch ein Verfahren mit den Merkmalen der Patentansprüche 1, 6 und 9 sowie durch eine Vorrichtung mit den Merkmalen nach Patentanspruch 13.

Bevorzugte Ausgestaltungen der Verfahren ergeben sich aus den jeweils zugehörigen Unteransprüchen.

Weitere Merkmale und Zweckmäßigkeiten der Erfindung ergeben sich aus der Beschreibung von Ausführungsbeispielen anhand der Figuren.

Von den Figuren zeigen:

Fig. 1     schematisch einen Teil einer Ausführungsform der erfindungsgemäßen Vorrichtung, mit dem komprimierte farbige Videoszenen erzeugt werden; und

Fig. 2     schematisch einen Teil einer Ausführungsform der erfindungsgemäßen Vorrichtung, mit dem die Wiedergabe komprimierter farbiger Videoszenen durchgeführt wird.

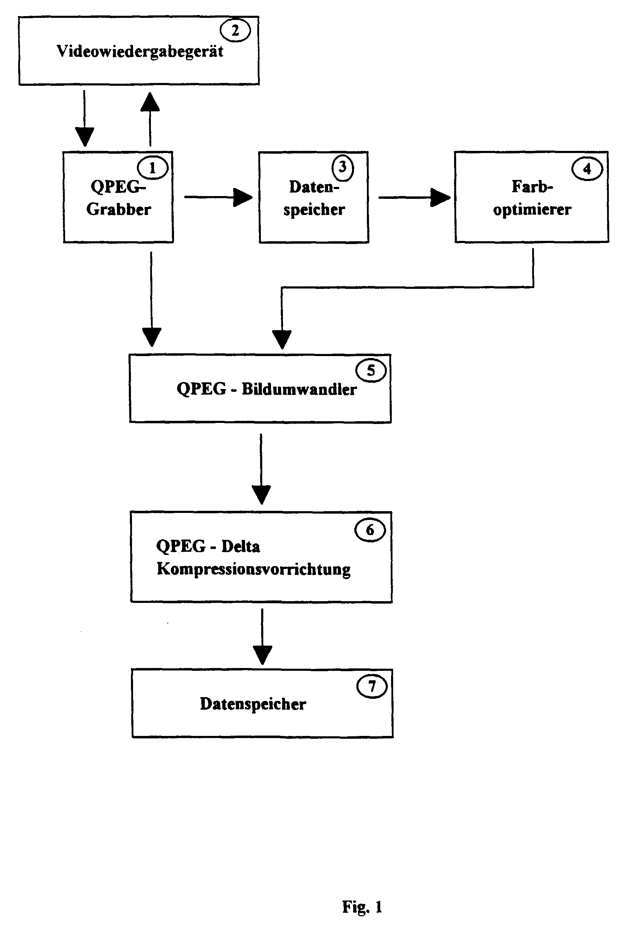

Wie in Fig. 1 gezeigt ist, ist ein sogenannten QPEG-Grabber 1 vorgesehen, der eine Ausführungsform eines herkömmlichen Frame-Grabbers darstellt. Der QPEG-Grabber 1 ist mit einem Videowiedergabegerät 2 verbunden. Der QPEG-Grabber 1 steuert das Videowiedergabegerät 2 und erhält Daten, nämlich Einzelbilder, auch Frames genannt von dem Videowiedergabegerät 2. Der QPEG-Grabber 1 steuert einen Vor/Rücklauf, ein Suchen und eine Einzelbildeinstellung des Videowiedergabegerätes 2. Der QPEG-Grabber 1 speichert die Einzelbilder einer ausgewählten Szene in einem Datenspeicher 3. Bevorzugt ist der Datenspeicher 3 auf einer Festplatte eines PC eingerichtet.

Ein QPEG-Farboptimierer 4, der eine Ausführungsform eines Farbkompressors ist, analysiert die in einer ganzen Szene vorkommenden Farben, wobei bis zu $2^{24}$ (ca. 16 Millionen) verschiedene Farbwerte auftreten, wenn drei Farben (rot, grün und blau) gewählt werden und jede Farbe mit einem Byte (8 Bit) dargestellt wird.

Der QPEG-Farboptimierer 4 bestimmt eine geeignete "Farbpalette", in der alle Pixel einer ganzen Szene in einem dreidimensionalen rot-grün-blau-Farbraum (RGB-Farbraum) registriert werden. Der RGB-Farbraum wird auf zweierlei Arten in 256 Farbquader zerlegt. Bei der ersten Art der Zerlegung enthält jeder Farbquader eine gleiche Anzahl von Pixeln. Bei dieser Zerlegung wird der gesamte Farbeindruck relativ gut wiedergegeben. Bei der zweiten Art der Zerlegung enthält jeder Farbquader eine gleiche Anzahl von Farben. In diesem Fall wird die Farbenvielfalt am besten wiedergegeben. Durch die erste und zweite Art der Zerlegung des dreidimensionalen RGB-Farbraumes entstehen 512 Farbquader. Jedem Farbquader wird ein mittlerer Farbwert zugeordnet. Ein gewichtetes mittel für die in einem Quader liegenden Farben wird so berechnet, daß die Wichtung bei Quadern der ersten Art anhand von Pixelsummen pro Farbe vorgenommen wird, während bei Quadern der zweiten Art eine Wichtung nur nach den benutzten Farben und nicht nach der Häufigkeit ihrer Benutzung erfolgt. Auf diese Weise werden 256 Farbwerte erster Art und 256 Farbwerte zweiter Art, also 512 Farbwerte ermittelt.

Nun werden aus den verbliebenen Farbwerten die zwei ermittelt, die den geringsten Farbabstand aufweisen. Dieser Abstand $d_{ij}$ wird nach folgender Formel berechnet:

$$d_{ij}(P_i \, P_j) = \sqrt{(R_i - R_j)^2 + (G_i - G_j)^2 + (B_i - B_j)^2} \, ,$$

wobei R, G und B die Rot-, Grün- und Blauanteile darstellen. Die zwei Farbwerte mit minimalem Abstand zueinander werden durch ihren mittleren Farbwert ersetzt. Dadurch reduziert sich die Zahl der verbliebenen Farbwerte um einen.

Dieses Verfahren wird wiederholt, bis nur noch 256 Farbwerte übrig sind.

Von den ursprünglich in dem dreidimensionalen RGB-Farbraum vorhandenen Farbwerten werden die 32 Farbwerte herausgesucht, die den größten Abstand zu den 256 erhaltenen Farbwerten haben. Diese Farbwerte werden zu den 256 erhaltenen Farbwerten hinzugefügt. Die so erhaltenen 288 Farbwerte werden weiter reduziert, indem wiederum zwei Farbwerte, die den geringsten Abstand voneinander aufweisen, zu einem mittleren Farbwert zusammengefaßt werden. Dieses wird durchgeführt, bis nur noch 236 Farbwerte übrig sind. Dadurch bleiben 20 der 256 darstellbaren Farbwerte für beliebige videounabhängige Darstellungen verfügbar.

Dieses Vorgehen hat den Vorteil, daß flächenmäßig kleine Bildelemente ausreichend berücksichtigt werden und daß die gesamte Verteilung der Farben durch die erhaltene Farbpalette wiedergegeben wird.

Ein QPEG-Bildumwandler 5 benutzt die so aufgestellte Farbpalette, um den Pixeln der Einzelbilder eine der 236 Farbwerte zuzuordnen. Die Farbwerte der Pixel müssen daher nicht mehr durch einen 24-Bit-RGB-Farbwert dargestellt werden, sondern es reicht ein 8-Bit-Index, der einen geeigneten RGB-Wert in der aufgestellten Farbpalette adressieren kann.

Der QPEG-Bildumwandler 5 dient weiter zum Entzerren von Einzelbildern, soweit es notwendig ist. Der QPEG-Grabber 1 liefert die Einzelbilder oder Pixel nicht immer in einem Höhen/Breiten-Verhältnis von 1:1. Diese Verzerrung kann durch den QPEG-Bildumwandler 5 ausgeglichen werden. Weiterhin kann der QPEG-Bildumwandler 5 eine Reduzierung auf eine einstellbare Zielgröße durchführen, z.B. von 576 Zeilen und 720 Spalten auf 288 Zeilen und 360 Spalten.

Eine QPEG-Delta-Kompressionseinrichtung 6 komprimiert die von dem QPEG-Bildumwandler 5 erzeugten Einzelbilder mit reduzierter Farbwertdarstellung. Die QPEG-Delta-Kompressionseinrichtung 6 simuliert anhand von Schwellenwerten für signifikante Helligkeits- und Farbwertschwankungen einen Szenenablauf. Jede Viedoszene wird nämlich dargestellt durch ein vollständiges Startbild auf das Differenzbilder folgen, bis das Szenenende erreicht ist. Bei der Berechnung der Differenzbilder werden nur Pixel berücksichtigt, deren Änderung einen eingestellten Schwellenwert für die Helligkeits- und Farbwertdifferenz überschreitet. Die Überprüfung der Farbwertänderung der Pixel erfolgt anhand des Bildes, das der Betrachter bei der Wiedergabe sehen würde, im Vergleich zu dem Bild, das als nächstes zu sehen sein soll. Aus diesem Grund muß bei der Differenzbildberechnung der Wiedergabevorgang mit den durch die Schwellenwertprüfung gemachten, bewußten Vernachlässigungen mit ablaufen. Damit ist gewährleistet, daß jedes angezeigte Bild nicht stärker vom Original abweicht, als es durch die Schwellenwerte vorgesehen ist. Würden nur aufeinanderfolgende Bilder ohne Beachtung des tatsächlichen Ablaufs betrachtet, fielen kleine, stetige Pixeländerungen, die von Bild zu Bild unter den Schwellenwerten liegen, nach mehreren Bildern jedoch darüber lägen, aus der Behandlung heraus. Damit würden sanfte Bildübergänge verfälscht werden. Das macht es möglich, Differenzbilder zu berechnen, die weniger Daten beinhalten aber die gesamte Information tragen.

Die QPEG-Delta-Kompressionseinrichtung führt danach eine Delta-Kompression der Differenzbilder durch. Es handelt sich dabei um eine Umwandlung in die Operationen einer virtuellen Kompressions/Dekompressionsmaschine. Die Operationen besitzen einen variablen langen Operationscode (1-, 2-, 3-Bits) und einen bis zur nächsten Bytegrenze genutzten Operandenteil (7-, 6-, 5-Bits). Die Codierung ist nach Gesichtspunkten der Huffman-Codierung und der schnellen Dekodierung vergeben (häufig vorkommende Operationen besitzen einen 1-/2-Bit-Code, seltenere einen 3-Bit-Code). Jede Operation beginnt an einer Byte-Grenze.

Die so aufgestellten komprimierten Differenzbilder, die eine komprimierte farbige Videoszene darstellen, werden danach in einem Datenspeicher 7 gespeichert.

Nach einer anderen Ausführungsform werden die Differenzbilder erzeugt, ohne daß vorher der Farboptimierer 4 den dreidimensionalen RGB-Farbraum von ca. 16 Millionen Farbwerten auf 236 Farbwerte reduziert hat. Die QPEG-Delta-Kompressionsvorrichtung bildet die Differenzbilder aus den unbehandelten Einzelbildern. D.h. es werden die sogenannten True-Colour-Einzelbilder verwendet. Danach wird wiederum die Kompression durchgeführt. Bei dieser Ausführungsform bleiben also alle True-Colour erhalten, so daß bei einer eventuellen Wiedergabe nicht nur 236 Farbwerte benutzt werden, wie sie für den Bildschirm eines PC geeignet sind, sondern es werden alle ursprünglich vorhandenen Farbwerte verwendet, so daß eine normale Videowiedergabe möglich ist. Neben der Berechnung der Differenzbilder und neben der Kompression der Differenzbilder kann weiterhin die Farbpalette mit den reduzierten Farbwerten berechnet werden und die Farbwerte für die Differenzbilder können durch die Farbpalette reduziert werden.

Nach einer anderen Ausführungsform werden die von dem QPEG-Bildumwandler 5 ausgegebenen Einzelbilder nicht direkt benutzt, um die Differenzbilder zu erzeugen. Die von dem QPEG-Bildumwandler 5 ausgegebenen Einzelbilder werden geglättet. Dabei wird ein gleitendes Mittel über drei bis fünf Einzelbilder für jedes entsprechende Pixel berechnet. Das gleitende Mittel hat die vorteilhafte Auswirkung, daß das Rauschen stark verringert wird.

Nach einer noch anderen Ausführungsform werden für eine True-Colour-Darstellung ebenfalls Farbpaletten berechnet, um ein Pixel mit nur einem Byte, statt drei (für den Rot-, Grün- und Blauanteil), darstellen zu können. Es wird für wenige aufeinander folgende Einzelbilder ein dreidimensionaler RGB-Farbraum aufgestellt und wie oben beschrieben eine Farbpalette mit 256 Farbwerten berechnet, die für die nachfolgenden Einzelbilder so lange verwendet wird, bis die Farb- oder Helligkeitsunterschiede einen vorbestimmten Abstand zu den Werten der Farbpalette überschreiten. Dann wird erneut aus einigen Einzelbildern eine Farbpalette mit 256 Farbwerten berechnet. Aus der bis dahin verwendeten Farbpalette werden Farbwerte gestrichen, die in den nachfolgend umzuwandelnden Bildern am unbedeutendsten sind. Die freigewordenen Plätze werden mit den wichtigsten Farben der neuen Farbpalette belegt. Dieses Verfahren wird beliebig oft wiederholt, wodurch erreicht wird, daß die meisten Pixel durch ein Byte dargestellt werden können, obwohl die Anzahl der benutzten Farben größer als 256 ist.

Wie oben beschrieben wurde, wird für jeweils eine Videoszene (Einstellung) eine Farbpalette aufgestellt, oder es wird eine Farbpalette für eine Unterszene aufgestellt. Bei dem Übergang von einer Szene zu der nächsten Szene können daher Einzelbilder direkt aufeinander folgen, die durch sehr unterschiedliche Farbpaletten dargestellt werden. Das Umstellen von einer Farbpalette für die vorangehende Szene, mit der das letzte Bild angezeigt wird, auf eine Farbpalette für die folgende Szene, mit der das erste Bild dargestellt werden soll, ist bei Grafikkarten mit 256-Farben-Darstellung mit Problemen behaftet. Bildanzeige und Einstellung der Farbpalette sind Vorgänge, die nur zeitlich nacheinander durchgeführt werden können. Verfährt man so, daß die Einstellung der Farbpalette für die folgende Szene veranlaßt wird, wenn noch das letzte Bild angezeigt wird, hat das zur Folge, daß das letzte Bild mit falschen Farben der nicht passenden Farbpalette für die folgende Szene zu sehen ist. Bringt man dagegen erst das erste Bild zur Anzeige, während noch die Farbpalette für die vorangehende Szenen eingestellt ist, so ist das erste Bild mit falschen Farben der nicht passenden Farbpalette für die vorangehende Szene zu sehen. Der Übergang von einer vorangehenden Szene mit einer Farbpalette für die vorangehende Szene zu einer folgenden Szene mit einer Farbpalette für die folgende Szene wird deshalb mit einem ersten Verfahren so durchgeführt, daß beim letzten/den letzten Bildern der Szene die Helligkeit der Farbpalette für die vorangehende Szene durch Umrechnen der Farbwerte in einem oder mehreren Schritten auf Werte Rot=0, Grün=0, Blau=0 (Farbe Schwarz) vorgenommen wird. In diesem Zustand erscheint jedes beliebige Bild als schwarze Rechteck. Nun wird das erste Bild der folgenden Szene zur Anzeige gebracht. Dieses ist ebenfalls als schwarzes Rechteck zu sehen. Anschließend wird die Farbpalette für die folgende Szene mit diesem ersten/den ersten Bildern der folgenden Szene in einem oder mehreren Schritten von der Helligkeit Schwarz auf die Originalhelligkeit der Farbpalette für die folgende Szene umgerechnet.

Es ist nicht immer erwünscht, daß zwei Szenen durch mehr oder weniger kurzzeitiges Ab- und Aufblenden voneinander getrennt werden. Es ist oft vielmehr gewünscht, daß die zwei Szenen ohne Übergangsschritte ablaufen, so daß die Umstellung der Farbpalette für den Betrachter nicht auffällig ist.

Mit einer anderen Ausführungsform wird deshalb jede vom Farboptimierer 4 zur Verfügung gestellte Farbpalette so aufgestellt, daß bei der Wiedergabe von Szenenübergängen auf einfache Weise eine Übergangsfarbpalette mit verzahnten Eintragungen aus beiden beteiligten Farbpaletten benutzt werden kann, die es gestattet, sowohl das letzte Bild der vorangehenden Szene mit halber Farbanzahl (118) als auch das erste Bild der folgenden Szene mit halber Farbanzahl in angemessener Qualität darzustellen. Die Farben werden dazu in der Farbpalette so angeordnet, daß jeweils ein gerader Farbindex auf eine Farbe zeigt, die der Farbe möglichst ähnlich ist, auf die ein nachfolgender ungerader Farbindex zeigt.

Die Farben werden in der Farbpalette nach Paaren ähnlicher Farben angeordnet. Es werden alle denkbaren sinnvollen Farbpaare einer Farbpalette 236 x 236 / 2 - 236 = 27612 berechnet. Dies ergibt eine Dreiecksmatrix ohne Diagonale, die z.B. oben rechts besetzt ist. Dann wird der Punktabstand $d_{ij}$ ($P_i$, $P_j$) auf die oben beschriebene Weise berechnet. Die Farbpaare werden nach steigendem Abstand sortiert. Ein Farbbelegungsvektor wird aufgestellt, dessen Anzahl von Komponenten gleich der Anzahl (236) von Farbwerten in der Farbpalette ist. Aus der Liste der sortierten Farbpaare wird das Farbpaar mit dem kleinsten Abstand genommen. Die beiden benutzten Farben werden im Farbbelegungsvektor registriert. Dann wird das Farbpaar mit dem nächstkleinsten Abstand genommen und in den Farbbelegungsvektor eingetragen, soweit die beiden Farben des Farbpaares noch nicht im Farbbelegungsvektor registriert sind. Das wird solange durchgeführt, bis nahezu alle Farben in dem Farbbelegungsvektor eingetragen sind. Lediglich die letzten Farbpaare, deren Farbdifferenz zu den anderen Farbpaaren sehr groß ist, werden aufgeteilt und jeder Farbe wird die selbe Farbe noch einmal als Partner zugeordnet.

Sind für alle Szenen Farbpaletten vorhanden, deren Farben paarweise ähnlich sind, kann bei der Wiedergabe beliebiger, aufeinanderfolgender Szenen jeweils an der Übergangsstelle die gewünschte verzahnte Farbpalette aus den Farbpaletten der vorangegangenen und der nachfolgenden Szene eingestellt werden. Durch dieses Vorgehen wird ein angenehm glatter Übergang von einer Szene zu der nächsten Szene erreicht.

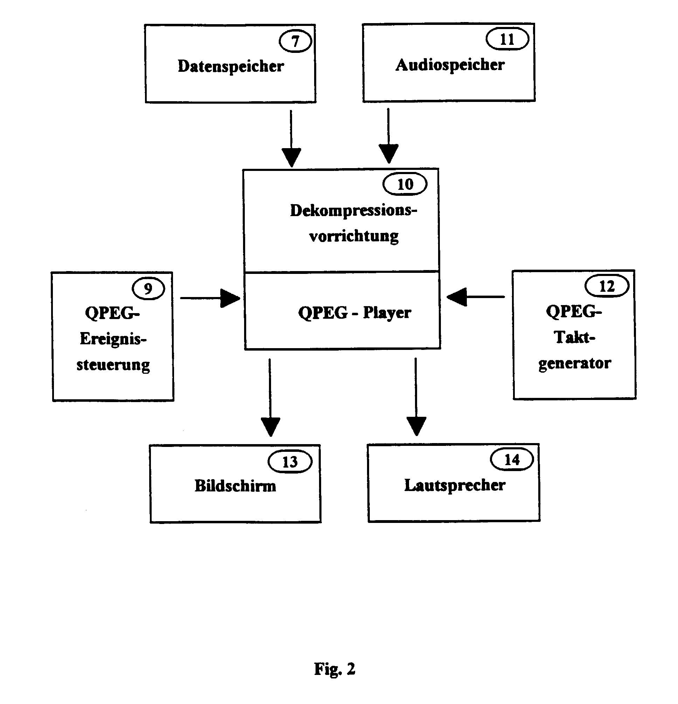

Wie in Fig. 2 gezeigt ist, wird die Wiedergabe der komprimierten farbigen Videoszene durch einen sogenannten QPEG-Player 8 durchgeführt. Der QPEG-Player 8 ist mit einer QPEG-Ereignissteuerung 9 verbunden. Die Ereignissteuerung prüft für jedes wiederzugebende Einzelbild anhand einer als Parameter übergebenen Funktion, ob ein interessierendes Ereignis eingetreten ist. Wenn ein interessierenden Ereignis eingetreten ist, wird dieses an eine Reaktionsfunktion zur Behandlung übergeben. Dabei kann während des laufenden Videos z.B. veranlaßt werden, daß nur der linke Tonkanal zu hören ist, oder es wird ein Text eingeblendet o.ä.. Es kann aber auch veranlaßt werden, die Wiedergabe zu stoppen oder abzubrechen oder das Video schneller oder langsamer oder rückwärts zu spielen oder mit einer anderen Szene fortzufahren.

Der QPEG-Player 8 weist eine Dekompressionseinrichtung 10 auf. Diese Dekompressionseinrichtung 10 übernimmt die komprimierten farbigen Videoszenen aus dem Datenspeicher 7 und führt eine Dekompression durch, die die inversen Operationen enthält, wie sie von der QPEG-Delta-Kompressionseinrichtung 6 durchgeführt werden.

Weiterhin übernimmt der QPEG-Player 8 Daten von einem Audiospeicher 11, in dem die zu den Szenen gehörenden Audiosignale gespeichert sind.

Der QPEG-Player 8 wird unter der Steuerung eines QPEG-Taktgenerators 12 betrieben. Der QPEG-Taktgenerator 12 benutzt zwei von überlicherweise drei vorhandenen Kanälen eines PC, die den Zeitgeberschaltungen zugeordnet sind. Dabei handelt es sich umd die BIOS-Uhr, den RAM-Auffrischungsteil und die Tonerzeugung für den PC-Lautsprecher. Die BIOS-Uhr ist üblicherweise dem Kanal 0 zugeordnet. Der Lautsprecher ist üblicherweise dem Kanal 2 zugeordnet.

Der Kanal 2 wird mit dem Kanal 0 sychronisiert, da der Kanal 2 selbst nicht interrupt-fähig ist.

Aufgrund der Komprimierung ist es möglich, mindestens 25 Bilder pro Sekunde aus dem Datenspeicher 7 in den QPEG-Player 8 einzuspeisen. Es wird ein Zeittakt aufgestellt, in dem zu einem Startzeitpunkt die Zustände der beiden Kanäle 0 und 2 zueinander synchronisiert werden. Der von der BIOS-Uhr benutzte Kanal 0 liefert 18,2 mal pro Sekunde einen Interrupt. Sein Zähler durchläuft dabei zweimal den Wertbereich 0...65.535. Für die genaue Zeitnahme wird beim Eintreten des oben genannten Interrupts der Kanal 2 gestartet. Er läuft dann, weil sich eine kleine Versetzung nicht vermeiden läßt, mit einer Differenz Delta zum Kanal 0 parallel. Dabei durchläuft der Zähler des Kanales 2 während der Taktzeit 1/18,2 sec einmal den Wertbereich 0...65.535.

Wenn für den Unterschied Delta und das Auslesen der beiden Zählerstände Korrekturen angebracht werden, kann eine auf 0,1 msec genaue Zeitnahme durchgeführt werden. Damit ist die Zeittaktgebung von 1/25 sec für jedes Bild gewährleistet.

Die Einzelbilder, die in der Dekompressionsvorrichtung 10 dekomprimiert worden sind und in dem QPEG-Player in Bilder mit dem richtigen Takt umgewandelt worden sind, werden auf einem Bildschirm 13 dargestellt, während die zugehörigen Audiosignale durch einen Lautsprecher 14 ausgegeben werden.

**Patentansprüche**

1. Verfahren zum Erzeugen einer komprimierten farbigen Videoszene aus einer farbigen Ausgangsvideoszene mit den Schritten:

   (a)    Eintragen von Farbwerten von Pixeln von Einzelbildern der Ausgangsvideoszene in einen dreidimensionalen Farbraum mit Dimensionen, die durch Farben dargestellt werden;

(b1)   erstes Unterteilen des dreidimensionalen Farbraumes in eine Mehrzahl erster Farbquader derart, daß jeder Farbquader eine gleiche vorbestimmte Zahl von Pixeln enthält, und Bestimmen für jeden ersten Farbquader eines mittleren Farbwertes, die insgesamt den farblichen Gesamteindruck der Ausgangsvideoszene wiedergeben;

(b2)   zweites Unterteilen des dreidimensionalen Farbraumes in eine Mehrzahl zweiter Farbquader derart, daß jeder zweite Farbquader eine gleiche vorbestimmte Zahl von in der Videoszene verwendeten Farben enthält, und Bestimmen für jeden zweiten Farbquader eines mittleren zweiten Farbwertes, die insgesamt die Farbvielfalt der Ausgangsvideoszene wiedergeben;

(c1)   Ersetzen der zwei mittleren in Schritt (b1) oder (b2) gewonnenen Farbwerte, die den kleinsten Abstand im Farbraum haben, durch Ihren Mittelwert; und

(c2)   Wiederholen des Schrittes (c1) bis eine erste gewünschte Zahl von mittleren Farbwerten erhalten wird.

2.   Verfahren nach Anspruch 1,
bei dem der Schritt (c2) folgende Schritte aufweist:

(c3)   Bestimmen einer vorbestimmten Anzahl von abweichenden Farbwerten in dem dreidimensionalen Farbraum, die die größten Abstände zu den anderen Farbwerten aufweisen;

(c4)   Hinzufügen der abweichenden Farbwerte zu der ersten gewünschten Zahl von Farbwerten; und

(c5)   Wiederholen des Schrittes (c1) mit den so erhaltenen Farbwerten, bis eine zweite gewünschte Zahl von Farbwerten erhalten wird.

3.   Verfahren nach einem der Ansprüche 1 oder 2, mit den Schritten:

(a1)   Unterteilen der farbigen Ausgangsvideoszenen in eine Mehrzahl von Unterszenen, und

(a2)   Bestimmen eines dreidimensionalen Farbraumes in Schritt (a) für jede Unterszene.

4.   Verfahren nach Anspruch 3, mit den Schritten:

-   Vorsehen eines Grenzwertes;

-   Bestimmen für ein auf die Unterszene folgenden des Einzelbild, ob eine Differenz zwischen den Farbwerten des folgenden Einzelbildes und der in den Schritten (c1, c2) zugeordneten Farbwerten den Grenzwert überschreitet; und

-   Aufstellen von 256 neuen Farbwerten, die aus noch benötigten Farben der in den Schritten (c1, c2) zugeordneten Farbwerte bestehen und die solche neuen Farbwerte enthalten, daß verhindert wird, daß der Grenzwert überschritten wird.

5.   Verfahren nach Anspruch 4,
bei dem die Farbwerte des ersten Einzelbildes der Unterszene nicht berücksichtigt werden, wenn die Farbwerte bereits des folgenden Einzelbildes wegen Grenzwertüberschreitung aufgenommen werden.

6.   Verfahren zum Erzeugen einer komprimierten farbigen Videoszene aus einer farbigen Ausgangsvideoszene,
mit den Schritten:

(d)   Bestimmen zweier aufeinander folgender Einzelbilder der Ausgangsvideoszene;

(e)   Festlegen von Schwellenwerten für die Helligkeits- und Farbwertdifferenz der Pixel der zwei aufeinander folgenden Einzelbilder;

(f)   Bestimmen eines Differenzbildes für die zwei aufeinander folgenden Einzelbilder mit Differenzpixeln in Abhängigkeit davon, ob der Schwellenwert für die Helligkeits- oder Farbwertdifferenz überschritten ist; und

(g)   Komprimieren der Differenzbilder,

wobei in Schritt (d) das Verfahren nach Anspruch 1 zum Erzeugen komprimierter Farbwerte für die aufeinanderfolgenden Einzelbilder ausgeführt wird.

7.   Verfahren nach Anspruch 6,
bei dem nach Schritt (d) folgender Schritt ausgeführt wird:

(d1)   Bestimmen eines gleitenden Mittels für die Helligkeits- und Farbwerte für Pixel der Einzelbilder,
wobei das gleitende Mittel über eine vorbestimmte Anzahl von aufeinander folgenden Einzelbildern genommen wird.

8.   Verfahren nach einem der Ansprüche 1 bis 7, mit den Schritten:

(h)   Bestimmen des letzten Einzelbildes einer Ausgangsvideoszene und des ersten Einzelbildes der darauffolgenden Ausgangsvideoszene;

(i)   Sortieren der Farbwerte des letzten Einzelbildes nach Farbähnlichkeit und Sortieren der Farbwerte des ersten Einzelbildes nach Farbähnlichkeit.

9. Verfahren zum Wiedergeben einer nach einem der Ansprüche 1 bis 8 komprimierten farbigen Videoszene,
mit den Schritten:

(j) Dekomprimieren der Differenzbilder;
(k) Aufaddieren der Differenzbilder zum Wiederherstellen der Einzelbilder; und
(l) Darstellen der Einzelbilder auf einem Bildschirm.

10. Verfahren nach Anspruch 9,
bei dem der Schritt (l) die folgenden Schritte aufweist:

(l1) Erzeugen eines Taktsignales;
(l2) Unterteilen von Einzeltakten des Taktsignales in Untere takte; und
(l3) Ableiten eines Zeittaktes zum Steuern der Wiedergabe der Einzelbilder aus den Untertakten.

11. Verfahren nach Anspruch 9 oder 10,
bei dem eine vorbestimmte Zahl der letzten Einzelbilder einer Videoszene mit der Hälfte der zugehörigen Helligkeits- und Farbwerte wiedergegeben wird,
wobei die fehlenden Helligkeits- und Farbwerte den ersten Einzelbildern der folgenden Videoszene entnommen werden.

12. Verfahren nach Anspruch 9 oder 10, bei dem das letzte Bild einer vorangehenden Videoszene und das erste Bild einer folgenden Szene mit halber Farbanzahl dargestellt werden, mit den Schritten:

(m) Bilden einer Übergangsfarbpalette aus den Farbwerten mit geradem Index der vorangehenden Szene und den Farbwerten mit ungeradem Index der folgenden Szene,
(n) Ändern der Pixel des letzten Bildes der vorangehenden Szene, die einen ungeradzahligen Wert besitzen auf den nächstniedrigeren geradzahligen Wert,
(o) Ändern der Pixel des ersten Bildes der beginnenden Szene, die einen geradzahligen Wert besitzen auf den nächshöheren ungeradzahligen Wert,
(p) Darstellen des letzten Bildes der vorangehenden Szene,
(q) Darstellen des ersten Bildes der folgenden Szene,
(r) Einstellen der Farbpalette der folgenden Szene, wobei die Änderungen in den Schritten (m) bis (o) umgekehrt ausgeführt werden können.

13. Vorrichtung, die eines der Verfahren nach einem der Ansprüche 1 bis 12 ausführt, zum Erzeugen einer komprimierten farbigen Videoszene aus einer farbigen Ausgangsvideoszene und zum Wiedergeben einer komprimierten farbigen Videoszene, mit:

(i) einer digitalen oder analogen Videoquelle (2),
(ii) einer Grabbereinrichtung (1) zum Extrahieren von Einzelbildern von der Videoquelle (2), und Speichern der Einzelbilder in einem Datenspeicher (3);
(iii) einer Farboptimierungseinrichtung (4) zum Sammeln der Farbwerte der Pixel von Einzelbildern einer farbigen Ausgangsvidoszene,
zum Unterteilen des durch die Farbwerte aufgespannten dreidimensionalen Farbraumes in Farbquader und zum Zuordnen eines mittleren Farbwertes zu jedem Farbquader;
(iv) einer Bildtransformationseinrichtung (5) zum Erzeugen von Einzelbildern mit den mittleren Farbwerten durch Zuordnen der mittleren Farbwerte zu den entsprechenden Pixeln;
(v) einer Kompressionseinrichtung (6) zum Komprimieren der Einzelbilder und Speichern der komprimierten Einzelbilder;
(vi) einer Dekompressionseinrichtung (10) zum Wiedergewinnen der komprimierten Einzelbilder und zum Dekomprimieren der Einzelbilder;
und
(vii) einem Taktgenerator zum Steuern des Taktes zum Wiedergeben der dekomprimierten Einzelbilder.

**Claims**

1. A method for generating a compressed coloured video scene from a coloured original video scene, comprising the steps of:

(a) entering of colour values of pixels of individual images of the original video scene into a three-dimensional colour space having dimensions being represented by colours;
(b1) first division of the three-dimensional colour space into a plurality of first colour rectangular paralle epipeds such that each colour rectangular parallel epiped contains the same predetermined number of pixels, and determining for each first colour rectangular parallel epiped a mean colour value which in total represent the colour impression of the original video scene;

(b2) second division of the three-dimensional colour space into a plurality of second colour rectangular parallel epipeds such that each second colour rectangular parallel epiped contains the same predermined number of colours used in the video scene, and determining for each of the second colour rectangular parallel epipeds a mean second colour value representing in total the colour diversity of the original video scene;

(c1) replacing the two mean colour values obtained in step (b1) or (b2) having the smallest distance in the colour space by their mean value; and

(c2) repeating the step (c1) until a first desired number of mean colour values is obtained.

2. The method according to claim 1, wherein the step (c2) comprises the steps of:

(c3) determining a predetermined number of diverting colour values in the three-dimensional colour space comprising the largest distances to the other colour values;

(c4) adding the diverting colour values to the first desired number of colour values; and

(c5) repeating the step (c1) with the such obtained colour values until a second desired number of colour values is obtained.

3. The method according to one of claims 1 or 2, comprising the steps of:

(a1) dividing the coloured original video scenes into a plurality of subscenes, and

(a2) determining a three-dimensional colour space in step (a) for each subscene.

4. The method according to claim 3, comprising the steps of:

- providing a threshold value;

- determining for an individual image following to the subscene whether a difference between the colour values of the following individual image and of the colour values asigned in the steps (c1), (c2) exceeds the threshold value; and

- establishing of 256 new colour values consisting of the still necessary colours of the colour values associated in the steps (cl, c2) and containing such new colour values that it is prevented that the threshold value is exceeded.

5. The method according to claim 4, wherein the colour values of the first individual image of the subscene are not taken into account if the colour values of the already following individual image are included because of exceeding the threshold.

6. A method for generating a compressed coloured video scene from a coloured original video scene, comprising the steps of:

(d) determining to successive individual images of the original video scene;

(e) determining the threshold values for the luminosity difference and the colour value difference of the pixels of two successive individual images;

(f) determining a differential image of the two successive individual images with differential pixels in response whether the threshold for the luminosity difference or the colour value difference is exceeded; and

(g) compressing the differential images, wherein in step (d) the method according to claim 1 for generating compressed colour values for the successive individual images is carried out.

7. The method according to claim 6, wherein after step (d) the following step is carried out:

(d1) determining a running means for the luminosity values and the colour values for the pixels for the individual images, wherein the running means is taken over a predetermined number of successive individual images.

8. A method according to one of claims 1 to 7, comprising the steps of:

(h) determining the last individual image of an original video scene and the first individual image of the following original video scene;

(i) ordering the colour values of the last individual image according to colour similarity and ordering the colour values of the first individual image according to the colour similarity.

9. The method for reproducing of a coloured video scene compressed according to one of claims 1 to 8, comprising the steps of:

(j) decompressing the differential images;

(k) adding the differential images for retrieval of the individual images; and

(l) displaying the individual images on a screen.

10. The method according to claim 1, wherein the step (1) comprises the following steps:

(l1) generating a clock signal;

(l2) dividing the individual clocks of the clock signal into subclocks; and

(l3) deriving a timing clock for controlling the reproduction of the individual images from the subclocks.

11. The method according to claim 9 or 10, wherein a predetermined number of last individual images of a video scene is reproduced with half of the corresponding luminosity values and colour values, the missing luminosity values and colour values being taken from the first individual images of the following video scene.

12. The method according to claim 9 or 10, wherein the last image of preceeding video scene and the first image of the following scene is reproduced with half the number of colours, comprising the steps of:

(m) forming a transition colour palette from the colour values with even index of the proceeding scene and the colour values with odd index of the following scene,

(n) changing the pixels of the last image of the preceeding scene having an odd value to the next lower even value,

(o) changing the pixels of the first image of the beginning scene having an even value to the next higher odd value,

(p) displaying the last image of the preceeding scene,

(q) displaying the first image of the following scene,

(r) adjusting the colour palette of the following scene, wherein the changes in the steps (m) to (o) may be exected reversely.

13. An apparatus executing the method according to one of claims 1 to 12, for generating a compressed coloured video scene from an original coloured video scene and for reproducing a compressed coloured video scene, comprising:

(i) a digital or analog video source (2),

(ii) grabber means (1) for extracting of individual images from the video source (2) and storing the individual images in a data memory (3);

(iii) colour optimizing means (4) for collecting the colour values of the pixels of the individual images of a coloured original video scene, for dividing the three-dimensional colour space spanned by the colour values into colour rectangular parallel epipeds and for associating a mean colour value to each colour rectangular parallel epiped;

(iv) image transformation means (5) for generating of individual images with the mean colour values by associating the mean colour values to the corresponding pixels;

(v) compression means (6) for compressing the individual images and storing the compressed individual images;

(vi) decompression means (10) for retrieving the compressed individual images and for decompressing the individual images; and

(vii) a clock generator for controlling the clock for reproducing the decompressed individual images.

**Revendications**

1. Procédé de création d'une séquence vidéo couleur comprimée à partir d'une séquence vidéo couleur de départ, comprenant les étapes consistant à :

(a) reporter des valeurs chromatiques de pixels appartenant à des images individuelles de la séquence vidéo de départ dans un espace chromatique en trois dimensions avec des dimensions représentées par des couleurs ;

(b1) subdiviser une première fois l'espace chromatique en trois dimensions en une pluralité de premiers parallélépipèdes chromatiques de sorte que chaque parallélépipède chromatique contient un nombre de pixels prédéterminé identique, et déterminer pour chaque premier parallélépipède chromatique une valeur chromatique moyenne, ces valeurs restituant ensemble l'impression chromatique globale de la séquence vidéo de départ ;

(b2) subdiviser une deuxième fois l'espace chromatique en trois dimensions en une pluralité de deuxièmes parallélépipèdes chromatiques de sorte que chaque deuxième parallélépipède chromatique contient un nombre prédéterminé identique des couleurs utilisées dans la séquence vidéo, et déterminer pour chaque deuxième parallélépipède chromatique une deuxième valeur chromatique moyenne, ces valeurs restituant ensemble la variété de couleurs de la séquence vidéo de départ ;

(c1) remplacer par leur moyenne les deux valeurs chromatiques moyennes obtenues à l'étape (b1) ou (b2) qui présentent la plus petite distance dans l'espace chromatique ; et

(c2) répéter l'étape (c1) jusqu'à ce qu'un premier nombre souhaité de valeurs chromatiques moyennes soit obtenu.

2. Procédé selon la revendication 1, dans lequel l'étape (c2) comprend les étapes suivantes :

(c3) déterminer une quantité prédéterminée de valeurs chromatiques divergentes, dans l'espace chromatique en trois dimensions, qui présentent les plus grandes distances par rapport aux autres valeurs chromatiques ;

(c4) ajouter les valeurs chromatiques divergentes au premier nombre souhaité de valeurs chromatiques ; et

(c5) répéter l'étape (c1) avec les valeurs chromatiques ainsi obtenues jusqu'à ce qu'un deuxième nombre souhaité de valeurs chromatiques soit obtenu.

3. Procédé selon l'une quelconque des revendications 1 ou 2, comprenant les étapes consistant à :

(a1) subdiviser les séquences vidéo couleur de départ en une pluralité de séquences subordonnées, et

(a2) déterminer un espace chromatique en trois dimensions à l'étape (a) pour chaque séquence subordonnée.

4. Procédé selon la revendication 3, comprenant les étapes consistant à :

- prévoir une valeur limite ;
- déterminer pour une image individuelle suivant la séquence subordonnée si une différence entre les valeurs chromatiques de l'image individuelle suivante et les valeurs chromatiques attribuées aux étapes (c1, c2) dépasse la valeur limite ; et
- établir 256 nouvelles valeurs chromatiques qui se composent de couleurs toujours nécessaires appartenant aux valeurs chromatiques attribuées aux étapes (c1, c2), et qui contiennent des nouvelles valeurs chromatiques telles que tout dépassement de la valeur limite est empêché.

5. Procédé selon la revendication 4, dans lequel les valeurs chromatiques de la première image individuelle de la séquence subordonnée ne sont pas prises en compte quand déjà les valeurs chromatiques de l'image individuelle suivante sont enregistrées en raison d'un dépassement de la valeur limite.

6. Procédé de création d'une séquence vidéo couleur comprimée à partir d'une séquence vidéo couleur de départ, comprenant les étapes consistant à :

(d) déterminer deux images individuelles successives de la séquence vidéo de départ ;

(e) fixer des valeurs de seuil pour la différence de luminosité et de valeur chromatique des pixels des deux images individuelles successives ;

(f) déterminer une image de différence pour les deux images individuelles successives avec des pixels de différence en fonction du fait si la valeur de seuil pour la différence de luminosité ou de valeur chromatique a été dépassée ; et

(g) comprimer les images de différence,

le procédé selon la revendication 1 étant effectué à l'étape (d) pour créer des valeurs chromatiques comprimées pour les images individuelles successives.

7. Procédé selon la revendication 6, dans lequel l'étape suivante est effectuée après l'étape (d) :

(d1) déterminer une moyenne mobile pour les valeurs de luminosité et de couleur pour les pixels des images individuelles, la moyenne mobile étant prise pour une quantité prédéterminée d'images individuelles successives.

8. Procédé selon l'une quelconque des revendications 1 à 7, comprenant les étapes consistant à :

(h) déterminer la dernière image individuelle d'une séquence vidéo de départ et la première image individuelle de la séquence vidéo de départ suivante ;

(i) trier les valeurs chromatiques de la dernière image individuelle sur la similitude chromatique, et trier les valeurs chromatiques de la première image individuelle sur la similitude chromatique.

9. Procédé pour restituer une séquence vidéo couleur comprimée selon l'une quelconque des revendications 1 à 8, comprenant les étapes consistant à :

(j) décomprimer les images de différence ;

(k) additionner les images de différence pour reconstituer les images individuelles ; et

(l) représenter les images individuelles sur un écran.

10. Procédé selon la revendication 9, dans lequel l'étape (l) comprend les étapes suivantes consistant à :

(l1) produire un signal de synchronisation ;

(l2) subdiviser des cycles individuels du signal de synchronisation en sous-cycles ; et

(l3) dériver un cycle de synchronisation pour commander la restitution des images individuelles à partir des sous-cycles.

11. Procédé selon la revendication 9 ou 10, dans lequel un nombre prédéterminé des dernières images individuelles d'une séquence vidéo est restitué avec la moitié des valeurs associées de luminosité et de couleur, les valeurs manquantes de luminosité et de couleur étant prélevées sur les premières images individuelles de la séquence vidéo suivante.

12. Procédé selon la revendication 9 ou 10, dans lequel la dernière image d'une séquence vidéo précédente et la première image d'une séquence suivante sont représentées avec la moitié des couleurs, comprenant les étapes consistant à :

> (m) former une palette de couleurs de transition à partir des valeurs chromatiques à index pair de la séquence précédente et les valeurs chromatiques à index impair de la séquence suivante,
>
> (n) changer les pixels de la dernière image de la séquence précédente, qui possèdent une valeur à chiffre impair, en la valeur à chiffre pair immédiatement plus basse,
>
> (o) changer les pixels de la première image de la séquence qui commence, qui possèdent une valeur à chiffre pair, en la valeur à chiffre impair immédiatement plus haute,
>
> (p) représenter la dernière image de la séquence précédente,
>
> (q) représenter la première image de la séquence suivante,
>
> (r) régler la palette de couleurs de la séquence suivante, les changements des étapes (m) à (o) pouvant être effectués dans l'ordre inverse.

13. Dispositif effectuant un des procédés selon l'une quelconque des revendications 1 à 22 pour créer une séquence vidéo couleur comprimée à partir d'une séquence vidéo couleur de départ, et pour restituer une séquence vidéo couleur comprimée, comprenant :

> (i) une source vidéo (2) numérique ou analogique ;
>
> (ii) un dispositif de capture (1) pour extraire des images individuelles à partir de la source vidéo (2), et pour stocker les images individuelles dans une mémoire de données (3) ;
>
> (iii) un dispositif d'optimisation de couleur (4) pour recueillir les valeurs chromatiques des pixels d'images individuelles d'une séquence vidéo couleur de départ, pour subdiviser un espace chromatique en trois dimensions, établi par les valeurs chromatiques, en parallélépipèdes, et pour attribuer une valeur chromatique moyenne à chaque parallélépipède chromatique ;
>
> (iv) un dispositif de transformation d'image (5) pour créer des images individuelles avec les valeurs chromatiques moyennes en attribuant les valeurs chromatiques moyennes aux pixels correspondants ;
>
> (v) un dispositif de compression (6) pour comprimer les images individuelles et pour stocker les images individuelles comprimées ;
(vi) un dispositif de décompression (10) pour rétablir les images individuelles comprimées et pour décomprimer les images individuelles ; et
(vii) un générateur de synchronisation pour commander le cycle pour restituer les images individuelles décomprimées.

Videowiedergabegerät ②

QPEG–Grabber ①

Daten-speicher ③

Farb-optimierer ④

QPEG - Bildumwandler ⑤

QPEG - Delta Kompressionsvorrichtung ⑥

Datenspeicher ⑦

Fig. 1

Fig. 2